(19) Europäisches Patentamt
European Patent Office
Office européen des brevets

(11) Publication number: 0 389 939 A2

# (12) EUROPEAN PATENT APPLICATION

(21) Application number: 90105287.8

(22) Date of filing: 21.03.90

(51) Int. Cl.5: C08F 10/00, C08F 2/02, C08F 4/642

(30) Priority: 27.03.89 US 329158

(43) Date of publication of application: 03.10.90 Bulletin 90/40

(84) Designated Contracting States: AT BE CH DE ES FR GB IT LI NL SE

(71) Applicant: THE DOW CHEMICAL COMPANY
2030 Dow Center Abbott Road
Midland, MI 48640(US)

(72) Inventor: Siddall, Jonathan H.
3308 Hubbard Road
Midland, Michigan 48640(US)

(74) Representative: Türk, Gille, Hrabal
Brucknerstrasse 20
D-4000 Düsseldorf 13(DE)

## (54) Coordination polymerization process.

(57) Disclosed is a polymerization process comprising contacting a coordination polymerizable monomer with a coordination polymerization catalyst under coordination polymerization conditions in a reactor which under reaction conditions has no dead space and further wherein all surfaces in contact with the reaction contents are subject to mechanical wiping action, said polymerization being conducted for a time sufficient to form a particulated, solid polymer. According to the present invention, a fine free-flowing particulated solid polymer product from a coordinator polymerizable monomer can be obtained.

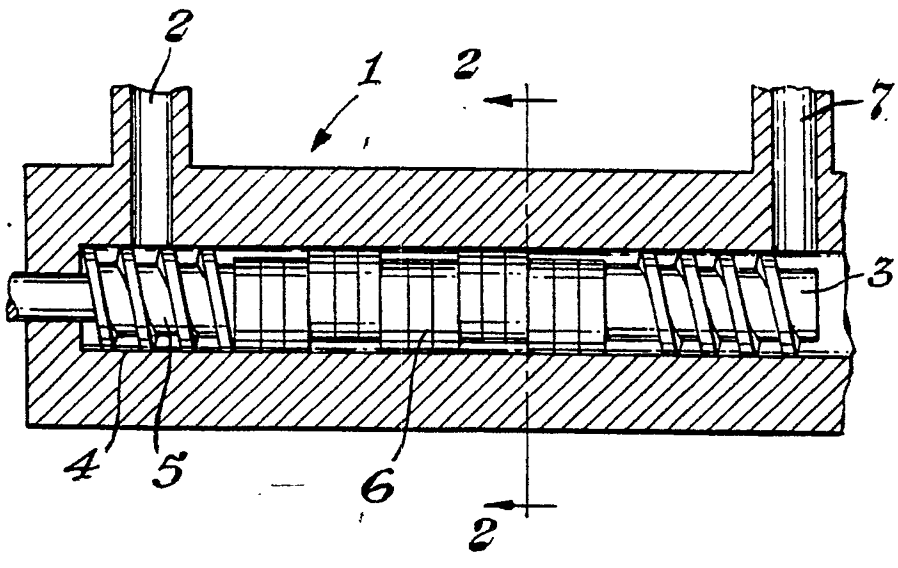


Fig. 1

EP 0 389 939 A2

# COORDINATION POLYMERIZATION PROCESS

The present invention relates to an improved process for preparation of coordination polymerized polymers. More particularly the present invention relates to such a process which achieves a finely particulated product with substantially no large agglomerations of polymer formation or reactor fouling. The present polymerization process is particularly well suited for use in a continuous process and may be employed as one step in a total polymerization scheme.

It is previously known in the art to prepare polymerization products by the coordination catalyzed polymerization of polymerizable monomers especially olefin monomers. Particularly well suited monomers for use in the present coordination catalyzed polymerization are normally liquid olefin monomers especially styrene, ring halo or alkyl substituted styrene and methylmethacrylate. Suitable coordination catalysts useful in the polymerization of such olefin monomers are well known in the art and belong to the general class of Ziegler-Natta catalysts. A particularly useful class of such Ziegler-Natta catalysts specifically adapted for the preparation of polymers from styrene or substituted styrene monomers are known in the art and belong to the specific class known as Kaminsky-Sinn catalysts. Such catalysts comprise a transition metal component and a cocatalyst and uniquely result in the preparation of polymers from styrene and substituted styrene monomers having a high degree of syndiotacticity.

In USP 4,680,353 certain titanium based Kaminsky-Sinn catalysts are employed in a bulk polymerization process for preparing polystyrene having a high degree of syndiotacticity. The polymerization is conducted in a conventional stirred reactor in a dilute solution of toluene or other suitable solvent. In USP 4,774,301 a similar process employing a zirconium containing Kaminsky-Sinn catalyst is disclosed. In EP's 271,874, 271,875 and 272,584 further description of suitable Kaminsky-Sinn catalysts is provided.

When the technique employed in the foregoing publications is attempted to be employed for commercial preparation of polymers it is desirable to increase the polymer yield and the throughput of the reactors by utilizing reaction mixtures containing reduced amounts of solvent or no solvent at all. Disadvantageously however, in such polymerizations it has been discovered that reactor fouling becomes a serious consequence of the use of such concentrated solutions or bulk polymerization conditions. That is, despite the use of vigorous agitation the polymer formed in the process forms a firm, crystalline structure that is impregnated with monomer. The product has a very low coefficient of friction and is difficult to agitate effectively. Moreover the resulting mass (product) adheres tenaciously to reactor surfaces but due to the surface lubrication caused by the presence of monomer, suitable agitation cannot be imparted to the reaction mass to prevent formation of large agglomerates of hard polymer and the attachment thereof to the reactor surfaces. Such agglomerates detach from the reactor but are not easily dispersed into a fine free-flowing particulated form. As a result the product becomes contaminated with such large agglomerates of polymer which are difficult to devolatilize to remove monomer and therefore must be pulverized.

In USP 4,619,979 there is disclosed a process for the free radical polymerization of vinyl compounds utilizing a wiped surface reactor such as a twin screw extruder. Such processes are commercially known for the preparation of acrylic acid polymers.

It would be desirable if there were provided a polymerization process for coordination catalyzed polymerizations which results in the formation of a fine free-flowing particulated solid polymer product.

It would be desirable if there were provided an improved polymerization process particularly adapted to the preparation of coordination catalyzed polymers of vinyl aromatic monomers capable of forming polymers having a high degree of syndiotacticity and crystalline structure and in a particulated solid form. By the term "high degree syndiotacticity", is meant greater than 50 percent, preferably greater than 90 percent syndiotacticity measured in a racemic triad on a molar basis as determined by 13C NMR spectroscopy.

It would be most desirable if there were provided a polymerization process able to prepare coordination catalyzed polymers of vinyl aromatic monomers which operates in the presence of substantially reduced amounts of solvent or in the substantial absence of a solvent.

According to the present invention there is now provided a polymerization process comprising contacting a coordination polymerizable monomer with a coordination polymerization catalyst, preferably a catalyst comprising the reaction product of a transition metal compound and a polyalkylaluminoxane, under coordination polymerization conditions in a reactor which under reaction conditions has substantially no dead space and further wherein substantially all surfaces in contact with the reaction contents are subject to mechanical wiping action, said polymerization being conducted for a time sufficient to form a particulated, solid polymer.

The present invention is particularly adapted for use in the preparation of polymers of vinyl aromatic monomers in the substantial absence of a solvent wherein the coordination catalyst is a Kaminsky-Sinn catalyst and the product formed is a crystalline solid.

Suitable coordination polymerizable monomers which can be polymerized in the process of the present invention include olefin monomers such as styrene, styrene derivatives, ethylene, propylene, butene, heptene, hexene, pentene, octene, decene, dodecene, tetradecene and hexadecene.

Particularly, suitable coordination polymerizable monomer which can be polymerized in the process of the present invention include those represented by the formula:

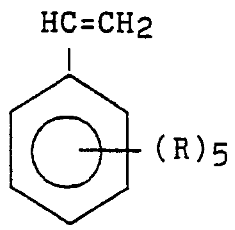

wherein each R is independently hydrogen, an aliphatic, cycloaliphatic or aromatic hydrocarbon group having suitably from 1 to 10, more suitably from 1 to 6, most suitably from 1 to 4, carbon atoms; or a halogen atom. Suitably such monomers include, for example styrene, chlorostyrene, n-butyl styrene, etc., with styrene being especially suitable.

Although diluents such as toluene, xylene, hexane, etc., may be employed in the polymerization process of the present invention, the process is considerably simplified by elimination of solvent recycle and polymer throughput is greatly increased if the polymerization is conducted in the substantial absence of any additional solvent or diluent. The resulting bulk or neat monomer process results in the preparation of a highly pure particulated solid polymer product directly from monomer.

The success of the present invention is largely due to the fact that the reactor employed has substantially no dead space during the polymerization and further because substantially all of the inner surfaces of the reactor in contact with the reaction contents are subjected to mechanical wiping action during the polymerization. By the term "dead space" it is meant that substantially the entire volume enclosed by the reactor is described per unit time by one or more rotating (agitating) members contained therein, that is, the rotating members should periodically move through every point within the reactor volume. Moreover, all surfaces within the reactor, including those surfaces of the rotating member(s) describing the volume of such reactor are periodically wiped with another surface of the reactor so as to impart shearing force to reactor contents that adhere to all such surfaces. Thus the "wiping action" required according to the present invention differs from shear applied by a rotary mixer or biaxial rotary blade device in that such rotary devices do not apply shear adjacent to substantially all the surfaces thereof. Because only certain surface portions of the mixing elements pass near to one another, only reactor contents adhering to those portions of the reactor surfaces experience shear. In a wiped surface reactor employed according to the present invention the shear forces move in a continuous manner across substantially all the surfaces of the reactor.

The above described reactor differs from conventional designed reactors having an impeller in that rotation of the impeller generally describes only a portion of the internal reactor volume. Thus portions of the reactor not within the volume described by the rotation of such reactor are considered to be "dead". Additional reactor design features include close tolerances between the rotating member(s) and the inside surfaces of the reactor. In a conventionally designed cylindrical reactor equipped with a helical agitator having a cord of a uniform dimension slightly less than the diameter of the reactor and length equal to slightly less than the total length of the reactor, rotation of the helical agitator describes the entire volume of the reactor. However, rotation of the agitator effectively mechanically wipes only the inner surface of the cylindrical reactor. The surfaces of the helical agitator and the axis thereof are not subjected to mechanical wiping action. Because of this deficiency, polymer buildup occurs on the helical agitator and ultimately leads to fouling of the reactor, necessitating its periodic cleaning, and the product becomes contaminated with undesirable agglomerates of polymer.

One suitable reactor design for use according to the present invention comprises a twin screw, wiped surface reactor. Preferably, contained within the reactor are two or more rotating shafts comprising shear or kneading members having an ellipsoidal-shaped or trochoidal-shaped cross-section, forwarding elements, and optionally, back mixing elements. The elements are held in place along the shaft by keys and may be arranged in flights of one or more. The elements at all points along the axis of such reactor are in contact both with an element of an opposed shaft or shafts and the reactor wall. The shafts may be contra-rotating or co-rotating.

The present invention will be described with reference to the following drawings.

Figure 1 discloses in cross section, a side view of a wiped surface reactor which can be used in the present invention.

Figures 2 and 3 disclose in cross section the interior of two screw wiped surface reactors suitable for use according to the present invention showing the arrangement of kneading elements.

Figure 4 discloses a schematic diagram of a process employing a wiped surface reactor as one element of a polymerization process.

A preferred design for a reactor containing trochoidal-shaped shear elements arranged in groups of three along twin shafts is illustrated in Figure 1. In this side view, there may be seen a reactor, 1, feed port, 2, one of the twin rotating shafts, 3, reactor barrel, 4, forwarding elements, 5, kneading elements, 6 arranged in flights of three, and polymer product outlet, 7.

In Figure 2 there is provided a cross-sectional view of the reactor interior showing the reactor barrel, 4, and the trochoidal-shaped kneading elements, 8, arranged longitudinally along the shaft, 3, and held in place with key, 9. The kneading elements are in contact both with the opposite kneading element of the opposite shaft and the inner surface of the barrel, 10.

In Figure 3 there is provided a cross-sectional view of a similar reactor having ellipsoidal-shaped kneading elements. In the figure there is seen a barrel, 4′, an ellipsoidal-shaped shear element, 8′, mounted on shaft, 3′, in contact with the inner surface of the barrel, 10′, and held in place with key, 9′.

Wiped surface reactors of one particular design which can be used in the present invention have been previously described in USP 4,619,979. Wiped surface reactors are described in that reference as comprising a shell or vessel which contains at least one rotor having a wiping portion located close to the inside surface of the shell and a root portion which is spaced substantially further from the shell than the wiping portion. As the rotor is rotated, the wiping portion passes close enough to the inside surface of the shell to clean the surface and form a seal when the reactor contains monomer and/or polymer but not so close as to cause permanent deformation of either the rotor or shell. It is preferable that the root surface of the rotor also be wiped or cleaned continuously during operation of the reactor.

Intermeshing twin screw extruders or mixers may be used as wiped surface reactors according to the present invention provided that sufficient residence time is provided. Such twin screw wiped surface reactors also give good control over the reaction temperature through separately jacketed sections of the reactor. That is, the barrel of a twin screw extruder may be divided into sections each of which may be either a heating section (i.e., a heating jacket) or a cooling section (i.e., jacket for circulating coolant) or both.

Preferably, the wiped surface reactor used is composed of a number of separate sections which may fit onto a common drive shaft by means of a keyway and which may be disassembled and rearranged in various order and orientations. Thus, the screws employed may have one pitch in the inlet section, another pitch in the middle of the screw length and yet another pitch toward the exit end of the reactor. It is also possible to utilize some screw sections having one start or helix or multiple (i.e., two or three) starts. In addition, relatively long residence times are required according to the present process, therefor while some of the extruder screw sections are oriented to convey the material within the extruder toward the outlet end, one or more screw sections may be reversed (referred to as reversed sections), or comprise kneading elements in order to increase mixing.

Preferred reactors for the present process comprise a large proportion of kneading elements with respect to the forwarding elements to provide a relatively long residence time and have length to diameter ratios of from 5/1 to 100/1. The reaction is preferably performed in the substantial absence of air or oxygen and other contaminants. A nitrogen pad may be applied to prevent oxygen contamination.

Typical reaction temperatures are from 40° C to 100° C, preferably from 50° C to 75° C. Separate control of temperature in various regions can be practiced as previously disclosed. Reaction times vary from 1/2 to 10 hours, preferably from 1 to 4 hours. Rotational speeds where twin screw wiped surface reactors are employed vary from 10 to 200 rpm, preferably 25 to 100 rpm.

Several features of the present process are of unique interest due to the fact that the polymerization is a coordination polymerization. First, it has been found desirable to prepare the coordination catalyst by combination of the transition metal component and the cocatalyst <u>in situ</u> in the reactor. In the Kaminsky-Sinn catalyzed polymerization of vinyl aromatic monomers to prepare polymers of high syndiotacticity, a suitable cocatalyst has been found to comprise a polyalkylaluminoxane, also referred to as an alkyl aluminoxane. The catalyst can readily be prepared <u>in situ</u>. This is preferably accomplished by dividing the monomer feed into two charge systems. Into one stream there is added the transition metal component. The cocatalyst is added to the second stream. Additional additives such as antioxidants, polymerization enhancers, etc., may also be included if desired.

The two monomer streams are combined in the reactor to form the catalyst and initiate polymerization. Suitably, molar ratios of monomer:transition metal compound on the order of 100:1 to $1x10^6$:1 are employed. Molar ratios of co-catalyst: transition metal compound of 10:1 to 10,000:1 are used. In calculating the molar weight for polyalkylaluminoxanes a degree of oligomerization of 18 is assumed.

All transition metal compounds previously known to be usefully employed in combination with trialkylaluminoxane in the preparation of coordination polymerization catalysts may be employed in the present invention. Such transition metal compounds are described in USP's 4,680,353, 4,774,301 and 4,808,680; and EP's 271,874, 271,875 and 272,584. Suitable transition metal compounds include titanium containing compounds such as titanium trihalide, biscyclopentadienyl titanium dichloride, monocyclopentadienyl titanium trichloride, titanium tetra n-butoxide and cyclopentadienyl titanium triphenoxide; and zirconium containing compounds such as zirconium trihalide, biscyclopentadienyl zirconium dichloride, monocyclopentadienyl zirconium trichloride, zirconium tetra n-butoxide and cyclopentadienyl zirconium triphenoxide.

In a particularly preferred embodiment of the present process, the transition metal compound is a titanate, especially a monocyclopentadienyl or substituted monocyclopentadienyl titanium tri $C_{1-10}$ alkoxide. The preferable co-catalyst is polymethyl-aluminoxane.

In a most preferred embodiment, a polymerization enhancer is combined with the co-catalyst prior to preparation of the catalyst. Examples of such enhancers are aluminum alkyl compounds, especially triisobutyl aluminum. The enhancer is combined with the polyalkylaluminoxane prior to addition of transition metal compound, preferably in an inert diluent at an elevated temperature of 50-100 °C. If an alkylaluminum polymerization enhancer is employed, amounts of alkylaluminum based on polyalkylaluminoxane from 0.1:1 to 10:0 are utilized. A further desirable procedure is the purification of the polyalkylaluminoxane prior to use. One suitable technique is to contact a solution thereof with activated alumina. It is believed this process removes undesired contaminants resulting during the preparation of the polyalkylaluminoxane.

In a further unique feature of the present process it is possible to employ the wiped surface reactor in combination with a secondary reactor which may be a conventional designed stirred reactor or merely a vessel equipped with an agitator adapted to retain the polymer under polymerization conditions. In the process the wiped surface reactor is employed to obtain a powdered product and a conversion of monomer sufficient to avoid agglomerate formation under subsequent reaction conditions. That is, once a particulated product is formed and the reaction has advanced to a relatively minor degree of conversion, the danger of agglomerate formation is greatly reduced. By employing a secondary reactor for subsequent polymerization, improved polymer throughput is realized. The secondary reactor operates as a powder reactor, i.e., the reactor contains polymer particles having monomer entrained in and on the polymer granules. Polymerization is continued in the secondary reactor until the desired degree of conversion is reached. Only a minimal amount of agitation needs to be supplied to the secondary reactor due to the nicely particulated nature of the polymer product formed in the wiped surface reactor. Ebulient cooling of the reactor contents may also be employed by condensing monomer vapor and returning the same to the reactor.

Conversion of monomer from 5 percent to 50 percent in the wiped surface reactor, preferably 10 percent to 30 percent are generally sufficient to avoid reactor fouling and agglomerate formation in the subsequent powder reactor. More than one wiped surface reactor could be employed as prereactors to supply a single large volume powder reactor. Generally temperatures from 40 °C to 250 °C, preferably 45 °C to 75 °C are employed in the powder reactor. Throughout the polymerization, the polymer is preferably retained in a solid state.

It has been discovered as an advantage of the present invention that problems due to the Thromsdorf effect may be minimized. The Thromsdorf effect involves the release the greatest amounts of thermal energy during a free radical polymerization at relatively high monomer conversions. This occurs at a point in the reaction when heat transfer is comparatively poor due to the viscosity of the reaction mixture. A wiped surface reactor provides for relatively good heat removal from the reaction mass due to the large ratio of surface to volume thereof and optional use of a cooled screw. In a coordination polymerization no Thromsdorf effect is noted. Accordingly no adverse affect is encountered by using a wiped surface reactor to conduct the preliminary stages of the polymerization and later switching to a secondary reactor having less effective heat transfer.

The embodiment of the invention employing a secondary powder reactor is further illustrated by reference to Figure 4 wherein there is disclosed a monomer supply means, 11, in operative communication with monomer pretreatment tanks 12, and 13. In addition a transition metal component supply means, 14, is in operative communication with tank, 12, and a cocatalyst supply means, 15, and polymerization promoter supply means, 16, are in operative communication with pretreatment tank, 13. A wiped surface reactor, 1, has inlet, 2, in operative communication with pretreatment tanks, 12 and 13,

and outlet means, 7, in operative communication with a secondary reactor, 17. Finished polymer is removed from the secondary reactor, and unreacted monomer is removed by a devolatilizing means, 18, equipped with a polymer discharge means, 19, and monomer recycle return means, 20.

According to the present invention, the following technical advantages can be expected.

1. A fine free-flowing particulated solid polymer product from a coordination polymerizable monomer can be obtained.

2. The present invention provides a coordination catalyzed polymerization process which operates in the substantial absence of a solvent.

3. In the case of using vinyl aromatic monomers, polymers having a high degree of syndiotacticity and crystalline structure in a particulated solid form can be obtained.

The present invention will be further described with reference to the following examples.

## Examples

A two inch (5.1 cm), twin screw, self wiping continuous processor, available from Teledyne Readco Corporation, was used as a reactor for the polymerization of styrene using a Kaminsky-Sinn catalyst. The catalyst was a combination of pentamethylcyclopentadienyl titanium trisphenoxide (titanate) with polymethylaluminoxane (cocatalyst) and triisobutyl aluminum (polymerization promoter). The wiped surface reactor had a volume of about 1000 cc, and a length/diameter of 9/1. The reactor jacket was heated to 75 °C with hot water. The wiped surface reactor was modified for continuous operation from the standard configuration by turning the barrel upside down. The discharge was thus moved from the bottom to the top, forcing the device to be full during operation. Forwarding elements were located at the entrance and discharge ends of the reactor. In between were arranged 18 ellipsoidal-shaped kneading units of 1.35 cm length arranged in groups of three.

Styrene monomer was deoxygenated with nitrogen for 20 minutes and then pumped by a polytetrafluoroethylene diaphragm pump through activated alumina and divided equally into two vessels. To the first vessel Pentamethylcyclopentadienyl titanium trisphenoxide ($1 \times 10^{-5}$ moles/mole styrene) was added. To the second vessel triisobutyl aluminum (TIBA) ($2 \times 10^{-3}$ moles/mole styrene) and polymethylaluminoxane (PMA) ($2 \times 10^{-3}$ moles/mole styrene) were added. The TIBA and PMA were heated together in a toluene solution at 70 °C for 30 minutes before being added to the styrene.

Before reaction, the, wiped surface reactor was made free of oxygen and water by filling it with styrene containing about 15 cc of 1 molar TIBA in toluene. The two styrene streams were metered in equal volumes to the wiped reactor with metering pumps at a total flow of 20 to 100 cc/minute. The two styrene solutions were charged to the wiped surface reactor to provide reactant ratios, expressed as the mole ratio of styrene:MAO:TIBA:titanate, of 50,000:100:100:1.

The wiped surface reactor operated steadily in continuous mode for 3.5 hours without any difficulties such as plugging, stalling, temperature excursions, or leaks. Power consumption was 100 watts (measured with a three phase watt meter) above the baseline (empty) reading of 460 watts. The unit was operated at 37 RPM during the reaction.

About 4 kg of polystyrene with a conversion of percent at 20 grams per minute, corresponding to a calculated residence time of 45 minutes was prepared. The product was a white powder that was wet with styrene monomer but without a discernible liquid phase present. Only minimal agitation was required to prevent any agglomeration of this material in subsequent processing steps.

The product was devolatilized by heating to 150 °C under vacuum. The polystyrene had a syndiotacticity measured by $C^{13}$ NMR in a racemic triad of greater than 90 percent.

## Claims

1. A polymerization process comprising contacting a coordination polymerizable monomer with a coordination polymerization catalyst under coordination polymerization conditions in a reactor which under reaction conditions has no dead space and further wherein all surfaces in contact with the reaction contents are subject to mechanical wiping action, said polymerization being conducted for a time sufficient to form a particulated, solid polymer.

2. A polymerization process according to Claim 1 wherein the reactor is a twin screw wiped surface reactor.

3. A process according to Claim 1 wherein the monomer is a vinyl aromatic monomer and the polymer is a crystalline solid.

4. A process according to Claim 3 wherein the polymer has a degree of syndiotacticity measured in a racemic triad of greater than 90 percent.

5. A process according to Claim 1 wherein the coordination polymerization catalyst is prepared in situ in the wiped surface reactor.

6. A process according to Claim 1 wherein the catalyst comprises a transition metal compound and a polyalkylaluminoxane

7. A process according to Claim 6 wherein the

transition metal compound is a monocyclopentadienyl or substituted monocyclopentadienyl titanium tris $C_{1-10}$ alkoxide or phenoxide, and the polyalkylaluminoxane is polymethylaluminoxane.

8. A process according to Claim 6 wherein the polyalkylaluminoxane is contacted with an alkyl aluminum compound prior to preparation of the catalyst.

9. A process according to Claim 1 wherein the particulated solid polymer is retained in a secondary reactor under polymerization conditions for a time sufficient to result in an increased degree of polymer formation.

10. A process according to Claim 9 wherein the secondary reactor is an agitated container containing particulated, solid polymer and liquid monomer entrained therein and coated on the surfaces of the particles.

Nouvellement déposé

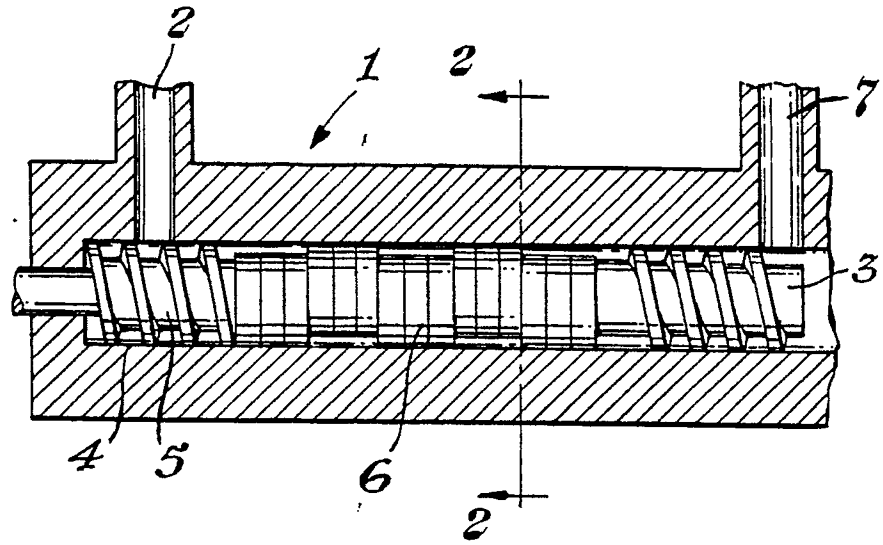


Fig. 1

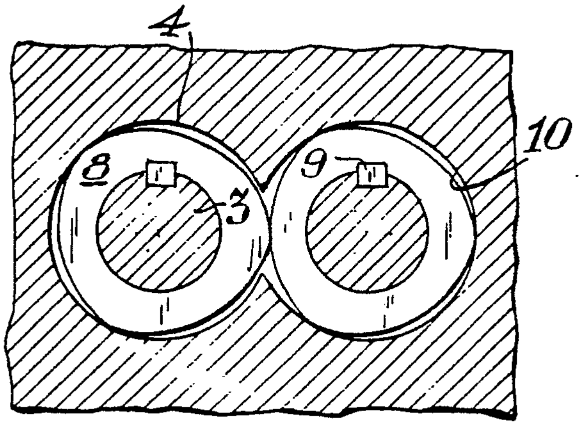


Fig. 2

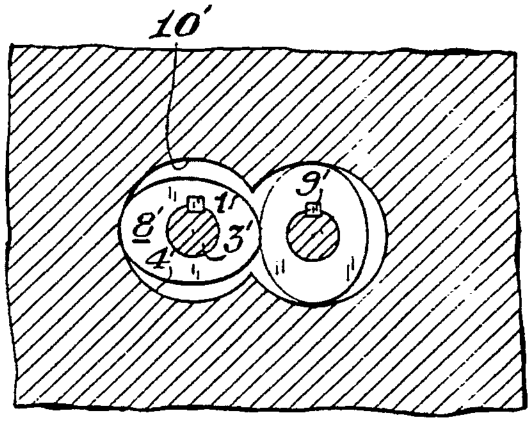


Fig. 3

eingereicht /
Nouvellement dé

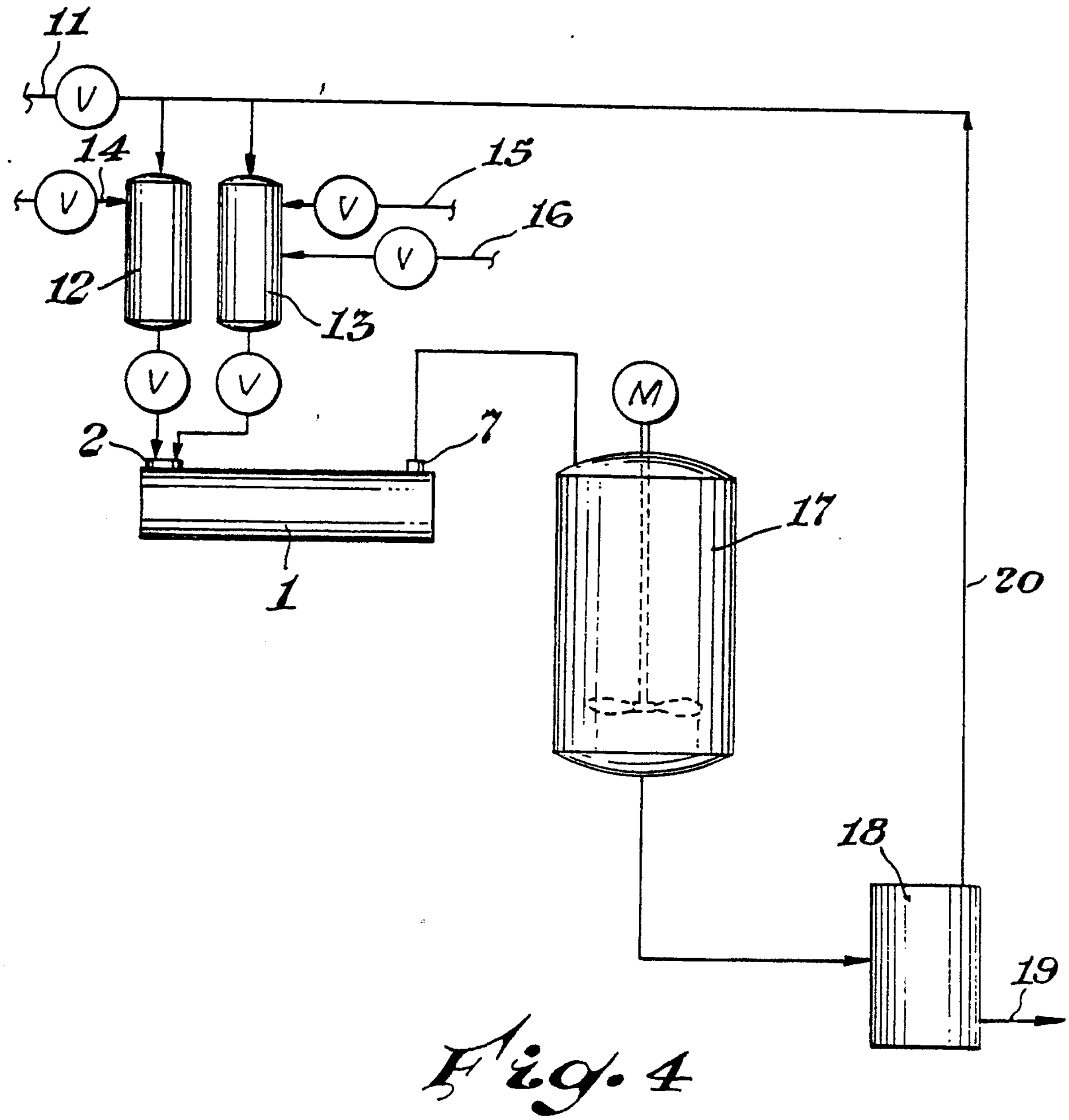


Fig. 4